# EUROPÄISCHE PATENTSCHRIFT

(11) **EP 2 871 327 B1**
(45) Veröffentlichungstag und Bekanntmachung des Hinweises auf die Patenterteilung: **13.03.2019**
(21) Anmeldenummer: 14190781.6
(22) Anmeldetag: 29.10.2014
(51) Int. Cl.: F01D 11/00, F01D 11/02, F16J 15/32

(54) **Dichtungsanordnung für eine Strömungsmaschine**
Sealing device for a turbo-engine
Dispositif d'étanchéité pour une turbomachine

(30) Priorität: 06.11.2013 DE 102013222514
(43) Veröffentlichungstag der Anmeldung: 13.05.2015
(73) Patentinhaber: MTU Aero Engines AG, 80995 München (DE)
(72) Erfinder: Werner, André, 80639 München (DE); Klän, Stephan, 14059 Berlin (DE); Hertter, Manuel, 81243 München (DE); Stiehler, Frank, 04924 Bad Liebenwerda (DE)

(56) Entgegenhaltungen:
- EP-A1- 0 453 315
- EP-A2- 1 018 613
- EP-A2- 1 331 423
- EP-A2- 1 353 097
- WO-A1-92/05378
- DE-A1-102008 027 021
- US-A- 3 383 033
- US-A1- 2005 040 602
- US-A1- 2007 132 189

## Beschreibung

Die vorliegende Erfindung betrifft eine Dichtungsanordnung für eine Strömungsmaschine gemäß dem Oberbegriff des Anspruchs 1 und eine Strömungsmaschine nach Anspruch 9.

In Strömungsmaschinen werden unterschiedliche Dichtungen, Dichtungssysteme und Dichtungsanordnungen eingesetzt. Beispiele sind Labyrinthdichtungen oder berührende Dichtungen zwischen rotierenden und statischen Teilen, Lagerdichtungen oder statische Dichtungen. Ein Versagen der Dichtung infolge von extremen Betriebszuständen beispielsweise durch starke Auslenkungen von Rotor- oder Statorelementen kann zum Kontakt des Rotors mit Halte- oder Stützelementen der Dichtungsanordnung führen. Dieser Kontakt kann erhebliche Schäden innerhalb und außerhalb der Strömungsmaschine bewirken, beispielsweise infolge von Bruchstücken der Dichtungsanordnung.

Eine Aufgabe der vorliegenden Erfindung ist es, eine Dichtungsanordnung für eine Strömungsmaschine mit einem Rotor vorzuschlagen, die die Risiken und möglichen Schäden in einer Strömungsmaschine minimiert, wenn extreme Betriebszustände durch starke Auslenkungen von Rotorelementen zum Kontakt des Rotors mit Halte- oder Stützelementen der Dichtungsanordnung führen.

Eine Dichtungsanordnung mit den Merkmalen des Oberbegriffs von Anspruch 1 zeigt Dokument EP 0 453 315. Weitere Dichtungsanordnungen sind in den Dokumenten EP 1 353 097, WO 92/05378, US 3 383 033, US 2005/0040602, DE 10 2008 027 021, EP 1 331 423, EP 1 018 613 und US 2007/0132189 offenbart.

Die erfindungsgemäße Aufgabe wird durch eine Dichtungsanordnung mit den Merkmalen des Anspruchs 1 gelöst.

Erfindungsgemäß wird somit eine Dichtungsanordnung für eine Strömungsmaschine vorgeschlagen. Die ringförmige Dichtungsanordnung weist wenigstens ein Dichtelement zur Abdichtung gegenüber einer Welle der Strömungsmaschine und eine ringförmige Stützvorrichtung auf. Die erfindungsgemäße Dichtungsanordnung befindet sich in einem Einbauzustand in der Strömungsmaschine. Die Stützvorrichtung weist an einem radial inneren Ende ein Material auf, welches bei einem Kontakt mit dem drehenden Rotor im Einbauzustand aufschmilzt, wobei das Material einen Schmelzpunkt zwischen 800 Grad Celsius und 1100 Grad Celsius aufweist.

Bei allen vorstehenden und folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Vorteilhafte Weiterentwicklungen der vorliegenden Erfindung sind jeweils Gegenstand von Unteransprüchen und Ausführungsformen.

Erfindungsgemäße Ausführungsformen können eines oder mehrere der im Folgenden genannten Merkmale aufweisen.

In einigen erfindungsgemäßen Ausführungsformen ist die Strömungsmaschine eine axiale Strömungsmaschine, insbesondere ein Flugtriebwerk.

In bestimmten erfindungsgemäßen Ausführungsformen ist die Dichtungsanordnung ein Überlastanstreifsystem, insbesondere für Bürstendichtungen. Eine Überlastsituation kann beispielsweise bei extremen Betriebszuständen von Flugtriebwerken auftreten. Derartige Betriebszustände können Fehlerfälle, beispielsweise bei einem defekten Einzelteil in einem Flugtriebwerk, oder Sonderfälle sein.

In manchen erfindungsgemäßen Ausführungsformen ist die Dichtungsanordnung eine Schleifdichtung, eine Bürstendichtung, eine Labyrinthdichtung oder eine andere Dichtungsanordnung oder Dichtungssystem.

In gewissen erfindungsgemäßen Ausführungsformen weist die Stützvorrichtung wenigstens einen Stützring und einen Deckring auf. Die Stützvorrichtung erstreckt sich insbesondere im Wesentlichen in radialer Richtung, bezogen auf die Mittelachse der Strömungsmaschine. Der Stützring und der Deckring sind ringförmig um die Mittelachse der Strömungsmaschine angeordnet. Der Stützring und der Deckring können segmentiert in Umfangsrichtung sein, beispielsweise in Form von zwei (180 Grad), drei (120 Grad), vier (90 Grad) oder mehr Segmenten über dem Umfang.

In bestimmten erfindungsgemäßen Ausführungsformen ist das Dichtelement geeignet, einen Spalt, insbesondere einen radialen Spalt, zwischen der Stützvorrichtung und dem Rotor der Strömungsmaschine abzudichten. Ein derartiger Spalt kann insbesondere Strömungsverluste minimieren. Strömungsverluste können dadurch entstehen, das das Durchströmungsmedium nicht durch die Leit- und Laufradbeschaufelung hindurchströmt, sondern durch Spalte zwischen der Welle und den Leiträdern und/oder durch Spalte zwischen den Laufrädern und dem Gehäuse.

Der Begriff "Rotor", wie er hierin verwendet wird, bezeichnet eine Welle der Strömungsmaschine, wobei mehrere Laufräder an oder auf der Welle angeordnet sein können. Weiterhin kann der Rotor Oberflächenbereiche aufweisen, die besonders geeignet zum Abdichten gegen Dichtelemente, insbesondere Bürstendichtungen, ausgeführt sind. Derartige Oberflächenbereiche können gehärtet und/oder oberflächenpoliert und/oder oberflächenbeschichtet sein.

In einigen erfindungsgemäßen Ausführungsformen dreht sich der Rotor insbesondere im normalen Betrieb der Strömungsmaschine. Der normale Betrieb weist insbesondere charakteristische Lastfälle auf, beispielsweise im Flugbetrieb im Steigflug, im Sinkflug und im Flug auf Reisehöhe. Der Rotor kann sich auch ohne Last, oder wenigstens im Wesentlichen ohne Last, im Leerlauf oder im Testlauf drehen.

Der Begriff "Aufschmelzen", wie er hierin verwendet wird, bezeichnet insbesondere ein Schmelzen des erfindungsgemäßen Materials, das die Stützvorrichtung wenigstens in einem Abschnitt aufweist, bei einem Kontakt mit dem drehenden Rotor im Einbauzustand. Ein Schmelzen oder Aufschmelzen dieses Materials bezeichnet den direkten Übergang des Materials vom festen Zustand in den flüssigen Aggregatzustand.

Insgesondere kann in manchen erfindungsgemäßen Ausführungsformen die für das Schmelzen oder Aufschmelzen notwendige Temperatur durch den Kontakt mit dem Rotor erzeugt werden. Beispielsweise kann bei einem stoßartigen Kontakt des drehenden Rotors mit dem Material, etwa in einem Schadensfall bei einer Unwucht infolge mechanischer Kräfte auf den Rotor, die Stoßenergie in Wärme umgewandelt werden und das Material aufschmelzen.

In gewissen erfindungsgemäßen Ausführungsformen ist die Dichtungsanordnung ausgestaltet, um an einem radial inneren Ende eines Leitrads der Strömungsmaschine angeordnet zu werden.

In einigen erfindungsgemäßen Ausführungsformen ist das Dichtelement eine Bürstendichtung.

In gewissen erfindungsgemäßen Ausführungsformen ist das Material eine selbstfließende Legierung oder eine Lotlegierung auf Nickel-Basis.

Der Begriff "selbstfließende Legierung", wie er hierin verwendet wird, bezeichnet Legierungen, die insbesondere durch thermische Spritzverfahren auf einen weiteren Werkstoff aufgetragen oder beschichtet werden, und während des Auftragsprozesses "selbstfließende" Eigenschaften aufweist. Diese "selbstfließenden" Eigenschaften können insbesondere auf einer Nickel-Basis der Legierung erreicht werden. Legierungen mit dem Basiselement Nickel (Ni) weisen vorteilhaft günstige mechanischen Eigenschaften, eine hohe Korrosionsbeständigkeit und eine gute Verarbeitbarkeit auf.

In bestimmten erfindungsgemäßen Ausführungsformen ist das Material mit dem Stützring mittels thermischen Spritzens, Löten oder Schweißen verbunden. Thermische Spritzverfahren sind beispielsweise das Kaltgasspritzen oder das Hochgeschwindigkeit-Flammspritzen (HVOF, High-Velocity-Oxygen-Fuel). Ein Lötverfahren kann das Auftragslöten sein. Beispielhafte Schweißverfahren sind das Auftragsschweißen oder generative Fertigungsverfahren wie z. B. das selektive Laserschmelzen (SLM - Selective Laser Melting).

In einigen erfindungsgemäßen Ausführungsformen weist das mit dem Stützring verbundene Material eine Mindesthöhe oder Mindestauftragshöhe in Radialrichtung, bezogen auf die Mittelache oder Drehache der Rotowelle, von ca. 0,5 mm auf.

In manchen erfindungsgemäßen Ausführungsformen ist das Material eine niedrigschmelzende Nickel-Legierung mit entweder Phosphor oder mit Bor und Silizium.

In gewissen erfindungsgemäßen Ausführungsformen ist das Material eine selbstfließende, niedrigschmelzende Nickel-Legierung mit wenigstens Bor, Silizium und Kohlenstoff.

Für die Eigenschaften von selbstfließenden Nickellegierungen oder Nickelbasishartlegierungen können die Legierungselemente Bor und Silizium vorteilhaft verwendet und eingesetzt werden. Insbesondere können die Legierungselemente Bor und Silizium für eine Absenkung der Schmelztemperatur von Nickellegierungen oder Nickelbasishartlegierungen vorteilhaft verwendet werden.

Nachfolgend werden beispielhaft mögliche niedrigschmelzende Legierungen genannt, ohne jedoch auf diese Beispiele eingeschränkt zu sein:

**Ni-Basis mit Phophor-Legierung (System Ni-Cr-P)**

| **Bezeichnung** | **Hersteller-bezeichnung** | **Chem. Zusammensetzung (Gewichts-Prozent; Gew.-%)** |
|---|---|---|
| B-Ni6 | Amdry 766 | Ni-11P |
| B-Ni7 | Amdry 767 | Ni-14Cr-10P |

**Ni-Basis mit B-Si-Legierung (System Ni-Fe-Cr-B-Si)**

| **Bezeichnung** | **Hersteller-bezeichnung** | **Chem. Zusammensetzung (Gewichts-Prozent; Gew.-%)** |
|---|---|---|
| B-Ni1 | Amdry 750 | Ni-14Cr-5Si-4Fe-3,3B |
| B-Ni2 | Amdry 770 | Ni-7Cr-4,5Si-3Fe-3B |
| B-Ni3 | Amdry 780 | Ni-4,5Si-3,2B |
| B-Ni4 | Amdry 790 | Ni-3,5Si-2B |
| B-Ni9 | Amdry 775 | Ni-15Cr-3B |

**Ni-Basis mit B-Si-C-Legierung (System Ni-Fe-Cr-B-Si-C) -selbstfließende Legierung**

| **Hersteller-bezeichnung** | **Chem. Zusammensetzung (Gewichts-Prozent; Gew.-%)** |
|---|---|
| Melco 14E | Ni-11Cr-3,7Si-2,75Fe-2,2B-0,5C |
| Melco 15E/F | Ni-17Cr-4Si-4Fe-3,5B-1C |
| Melco 20 | Ni-16Cr-4,5Si-4Fe-3,5B-0,6C |

### Beispiel: Ni-14Cr-5Si-4Fe-3,3B

Nickel-Basislegierung mit 14 Gewichtsprozent (Gew.-%) Chrom, 5 Gew.-% Silizium, 4 Gew.-% Eisen (Fe) und 3,3 Gew.-% Bor.

In manchen erfindungsgemäßen Ausführungsformen sind die Boranteile in der Nickel-Basislegierung zwischen 2 und 4 Gew.-%, die Siliziumanteile zwischen 2 und 5 Gew.-% und die Chromanteile zwischen 5 und 17 Gew.-%.

In bestimmten erfindungsgemäßen Ausführungsformen ist die Stützvorrichtung vollständig aus dem aufschmelzenden Material, insbesondere aus einem niedrigschmelzenden Material, hergestellt.

In bestimmten erfindungsgemäßen Ausführungsformen ist das Dichtelement im Einbaustand wenigstens abschnittsweise mit dem Material in Axialrichtung berührend angeordnet.

Manche oder alle erfindungsgemäßen Ausführungsformen können einen, mehrere oder alle der oben und/oder im Folgenden genannten Vorteile aufweisen.

Mit der erfindungsgemäßem Dichtungsanordnung kann eine starke Erhitzung der Dichtungsanordnung bei einem Kontakt der Stützvorrichtung mit dem Rotor, insbesondere bei einer Überlastsituation, vorteilhaft vermieden werden. Insbesondere bei einem niedrigschmelzenden Werkstoff als Material, welches wenigstens abschnittsweise die Stützvorrichtung aufweist und welches bei einem Kontakt mit dem drehenden Rotor im Einbauzustand aufschmilzt, kann das aufschmelzende Material vorteilhaft abgeschleudert werden. Mit diesem Abschleudern wird der Kontaktbereich zwischen dem Rotor und der Stützvorrichtung entlastet, und kann dadurch ein Überhitzen oder Beschädigen des Rotors vorteilhaft verhindern.

Die vorliegende Erfindung wird im Folgenden anhand der beigefügten Zeichnung, in welcher identische Bezugszeichen gleiche oder ähnliche Bauteile bezeichnen, exemplarisch erläutert. In der schematisch vereinfachten Figur gilt:

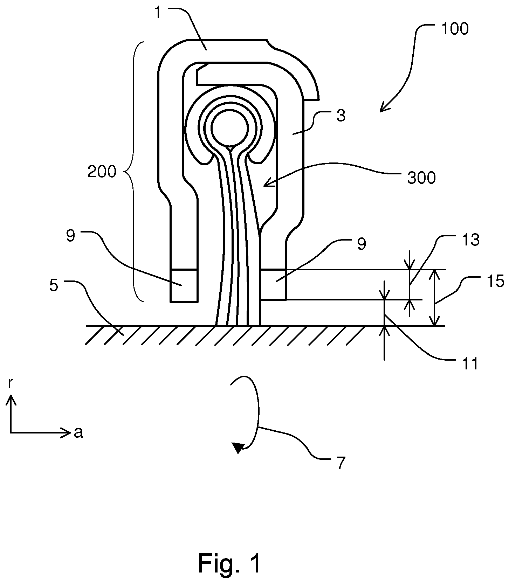

- **Fig. 1**: zeigt eine Seitenansicht einer erfindungsgemäßen Dichtungsanordnung.

**Fig. 1** zeigt eine erfindungsgemäße Dichtungsanordnung 100 als ein Überlastanstreifsystem mit einer Bürstendichtung 300.

Die Dichtungsanordnung 100 weist eine Stützvorrichtung 200 und ein Dichtelement 300 (ausgeführt als Bürstendichtung 300) auf. Die Stützvorrichtung 200 weist einen Deckring 1 und einen Stützring 3 auf. In der Stützvorrichtung 200 ist das Dichtelement 300 fixiert.

Die Dichtungsanordnung 100 ist ringförmig um einen Rotor 5 angeordnet. Die Drehrichtung des Rotors ist mit einem Pfeil 7 dargestellt. Die Dichtungsanordnung 100 oder einzelne Bereiche davon, beispielsweise der Deckring 1 und/oder der Stützring 3, können über dem Umfang segmentiert sein.

Die Dichtungsanordnung 100 ist insbesondere am radial inneren Ende eines Leitrads (in Fig. 1 nicht dargestellt) angeordnet.

Die Bürstendichtung 300 ist zwischen dem Deckring 1 und dem Stützring 3 mittels einer mechanischen Klemmung befestigt oder fixiert.

Das erfindungsgemäße aufschmelzbare Material 9 ist am radial inneren Ende sowohl des Deckrings 1 als auch des Stützrings 3 angeordnet. Insbesondere ist das Material 9 mittels eines thermischen Spritzverfahrens auf den Deckring 1 und den Stützring 3 aufgebracht.

Im dargestellten Einbauzustand der erfindungsgemäßen Dichtungsanordnung (oder im Normalbetrieb der Strömungsmaschine) ist ein Spalt 11 zwischen einerseits dem radial inneren Ende des Deckrings 1 und des Stützrings 3 und andererseits dem Rotor 5 ausgebildet. Die Höhe 13 in Radialrichtung r des aufschmelzenden Materials weist insbesondere eine Mindesthöhe von 0,5 mm auf.

Die Summe der Höhe des Spalts 11 in Radialrichtung und der radialen Höhe 13 des aufschmelzenden Materials 9 wird als Überdeckung 15 im Überlastfall bezeichnet. Im Überlastfall, beispielsweise bei extremen Betriebszuständen von Flugtriebwerken, kann es zu starken Auslenkungen des Rotors 5 in Radialrichtung r kommen. Wenn diese Auslenkungen innerhalb der Höhe des Spalts 11 auftreten, sind diese Betriebszustände unkritisch. Wenn jedoch die Auslenkungen über die Spalthöhe 11 hinausgehen, führt die erfindungsgemäße Dichtungsanordnung zu einem Aufschmelzen des Materials 9, insbesondere bei niedrigschmelzenden Material als Material 9. Bei einem Schmelzen im Überlastfall kann das Material 9 abgeschleudert werden und somit den Kontaktbereich des Rotors 5 mit dem Material 9 entlasten. Dies kann wiederum ein folgenschweres Überhitzen und Beschädigen des Rotors 5 verhindern.

### Bezugszeichenliste

- 100: Dichtungsanordnung
- 200: Stützvorrichtung
- 300: Dichtelement; Bürstendichtung
- a: axial; Axialrichtung
- r: radial; Radialrichtung
- 1: Deckring
- 3: Stützring
- 5: Rotor
- 7: Drehrichtung des Rotors
- 9: aufschmelzbares Material
- 11: Spalt zwischen Deckring/Stützring und Rotor
- 13: radiale Höhe des aufschmelzbares Materials
- 15: Überdeckung (im Überlastfall)

## Patentansprüche

1. Dichtungsanordnung (100) für eine Strömungsmaschine mit einer Welle (5), wobei die ringförmige Dichtungsanordnung (100) ein Dichtelement (300) zur Abdichtung gegenüber der Welle (5) in einem Einbauzustand und eine ringförmige Stützvorrichtung (200) aufweist, wobei ein Material (9) an einem radial inneren Ende der Stützvorrichtung (200) angeordnet ist, **dadurch gekennzeichnet, dass** das Material (9) bei einem Kontakt mit der drehenden Welle (5) im Einbauzustand aufschmilzt und das Material (9) einen Schmelzpunkt zwischen 800 Grad Celsius und 1100 Grad Celsius aufweist.

2. Dichtungsanordnung (100) nach Anspruch 1 , wobei das Dichtelement (300) eine Bürstendichtung (300) ist.

3. Dichtungsanordnung (100) nach einem der vorangegangenen Ansprüche, wobei das Material (9) eine selbstfließende Legierung oder eine Lotlegierung auf Nickel-Basis ist.

4. Dichtungsanordnung (100) nach einem der vorangegangenen Ansprüche, wobei das Material (9) mit der Stützvorrichtung (200) mittels thermischen Spritzens, Löten oder Schweißen verbunden ist.

5. Dichtungsanordnung (100) nach einem der vorangegangenen Ansprüche, wobei das Material (9) mit einem Stützring (3) der Stützvorrichtung (200) verbunden ist und eine Mindesthöhe (13) in Radialrichtung, bezogen auf die Mittelachse der Dichtungsanordnung (100), von 0,5 mm aufweist.

6. Dichtungsanordnung (100) nach einem der vorangegangenen Ansprüche, wobei das Material (9) eine niedrigschmelzende Nickel-Legierung mit entweder Phosphor oder mit Bor und Silizium ist.

7. Dichtungsanordnung (100) nach einem der vorangegangenen Ansprüche, wobei das Material (9) eine selbstfließende, niedrigschmelzende Nickel-Legierung mit wenigstens Bor, Silizium und Kohlenstoff ist.

8. Dichtungsanordnung (100) nach einem der vorangegangenen Ansprüche, wobei das Dichtelement (300) im Einbaustand wenigstens abschnittsweise mit dem Material (9) in Axialrichtung berührend angeordnet ist, die parallel zur Mittelachse der Dichtungsanordnung verläuft.

9. Strömungsmaschine mit einer Dichtungsanordnung (100) nach einem der vorangegangenen Ansprüche.

## Claims

1. Seal assembly (100) for a turbomachine having a shaft (5), the annular seal assembly (100) comprising a sealing element (300) for sealing with respect to the shaft (5) when installed and an annular support device (200), a material (9) being arranged at a radially inner end of the supporting device (200),
**characterized in that**
the material (9) melts upon contact with the rotating shaft (5) when installed and the material (9) has a melting point between 800°C and 1100°C.

2. Seal assembly (100) according to claim 1, wherein the sealing element (300) is a brush seal (300).

3. Seal assembly (100) according to either of the preceding claims, wherein the material (9) is a self-flowing alloy or a solder alloy based on nickel.

4. Seal assembly (100) according to any of the preceding claims, wherein the material (9) is connected to the support device (200) by means of thermal spraying, soldering or welding.

5. Seal assembly (100) according to any of the preceding claims, wherein the material (9) is connected to a support ring (3) of the support device (200) and has a minimum height (13) in the radial direction, relative to the central axis of the seal assembly (100), of 0.5 mm.

6. Seal assembly (100) according to any of the preceding claims, wherein the material (9) is a low-melting nickel alloy comprising either phosphorus or boron and silicon.

7. Seal assembly (100) according to any of the preceding claims, wherein the material (9) is a self-flowing, low-melting nickel alloy comprising at least boron, silicon and carbon.

8. Seal assembly (100) according to any of the preceding claims, wherein the sealing element (300), when installed, is arranged so as to be in contact with the material (9) in the axial direction at least in portions, which axial direction extends in parallel with the central axis of the seal assembly.

9. Turbomachine having a seal assembly (100) according to any of the preceding claims.

## Revendications

1. Dispositif d'étanchéité (100) pour une turbomachine comportant un arbre (5), le dispositif d'étanchéité (100) annulaire présentant un élément d'étanchéité (300) destiné à assurer l'étanchéité contre l'arbre (5) dans un état de montage et un dispositif de support annulaire (200), un matériau (9) étant disposé à une extrémité radialement interne du dispositif de support (200), **caractérisé en ce que**
le matériau (9) est en fusion au contact de l'arbre rotatif (5) dans l'état de montage et le matériau (9) présente un point de fusion compris entre 800 degrés Celsius et 1100 degrés Celsius.

2. Dispositif d'étanchéité (100) selon la revendication 1, dans lequel l'élément d'étanchéité (300) est une étanchéité à brosse (300).

3. Dispositif d'étanchéité (100) selon l'une des revendications précédentes, dans lequel le matériau (9) est un alliage auto-fondant ou un alliage de brasage à base de nickel.

4. Dispositif d'étanchéité (100) selon l'une des revendications précédentes, dans lequel le matériau (9) est relié au dispositif de support (200) au moyen d'une projection thermique, d'un brasage ou d'un soudage.

5. Dispositif d'étanchéité (100) selon l'une des revendications précédentes, dans lequel le matériau (9) est relié à une bague de support (3) du dispositif de support (200) et présente une hauteur minimale (13) dans la direction radiale, par rapport à l'axe médian du dispositif d'étanchéité (100), de 0,5 mm.

6. Dispositif d'étanchéité (100) selon l'une des revendications précédentes, dans lequel le matériau (9) est un alliage de nickel à bas point de fusion comportant du phosphore ou comportant du bore et du silicium.

7. Dispositif d'étanchéité (100) selon l'une des revendications précédentes, dans lequel le matériau (9) est un alliage de nickel auto-fondant à bas point de fusion comportant au moins du bore, du silicium et du carbone.

8. Dispositif d'étanchéité (100) selon l'une des revendications précédentes, dans lequel l'élément d'étanchéité (300) est disposé dans l'état de montage, au moins partiellement, en contact avec le matériau (9) dans la direction axiale, laquelle s'étend parallèlement à l'axe médian du dispositif d'étanchéité.

9. Turbomachine comportant un dispositif d'étanchéité (100) selon l'une des revendications précédentes.
